# DEMANDE DE BREVET EUROPEEN

(11) **EP 0 566 802 A1**
(43) Date de publication de la demande: **27.10.1993**
(21) Numéro de dépôt: 92401017.6
(22) Date de dépôt: 10.04.1992
(51) Int. Cl.: A23L 1/18

(54) **Dispositif de préparation de mais éclaté**

(71) Demandeur: SOCAMEX Sarl, F-75008 Paris (FR)
(72) Inventeur: Besso, René, f-75008 Paris (FR)
(74) Mandataire: Wagret, Frédéric Cabinet Wagret Consultants

(57) **Abrégé**

Le dispositif, équipant un distributeur à pièces, comprend : une chambre d'éclatement réalisée sous forme d'un caisson (24) de forme triangulaire possédant une paroi supérieure (21) horizontale, une paroi frontale (22) verticale, deux joues latérales (23) verticales, et une paroi de fond (25) oblique articulée susceptible de fermer le caisson (24) pour l'éclatement et de s'ouvrir pour verser une charge de maïs éclaté dans un gobelet; un moyen (30) pour introduire de l'air chaud à sa partie inférieure; et des moyens (41) pour introduire du maïs à sa partie supérieure.

## Description

L'invention concerne la fabrication du maïs éclaté, ou pop-corn.

On connaît par exemple, par le document US-A-4 178 843, un dispositif de préparation du pop-corn comportant une chambre d'éclatement, un moyen pour introduire de l'air chaud à la partie inférieure de la chambre et un moyen pour introduire du maïs à sa partie supérieure.

L'appareil connu peut donner satisfaction pour la préparation de portions de maïs éclaté dans un cadre domestique, mais ne saurait convenir à la distribution de pop-corn dans des machines distributrices destinées au public. En effet, l'appareil connu impose un chargement manuel du maïs non éclaté pour chaque dose de maïs préparée; de plus, le maïs éclaté se trouve dans une cuve qu'il faut renverser manuellement pour la vider.

Le but ultime de l'invention est de proposer une machine distributrice de pop-corn et, pour ce faire, une première étape est de proposer un dispositif de préparation compatible avec ce but.

A cette fin, l'invention a pour objet un dispositif de préparation de maïs éclaté dont la chambre d'éclatement est réalisée sous forme d'un caisson de forme sensiblement triangulaire possédant une paroi supérieure sensiblement horizontale, une paroi frontale sensiblement verticale, deux joues latérales sensiblement verticales, et une paroi de fond oblique et mobile, susceptible d'occuper une position de fermeture du caisson pour la réalisation de l'éclatement et une position d'ouverture pour le versement d'une charge de maïs éclaté.

Grâce à ces dispositions, il est possible de préparer successivement plusieurs charges de maïs éclaté qu'on peut facilement verser, à la fin de chaque cycle d'éclatement, dans un récipient prévu à cet effet sous le caisson, et plus précisément sous la zone d'ouverture de la paroi de fond mobile.

Avantageusement, la paroi de fond est articulée près du coin supérieur aigu du caisson. Deux joues de canalisation adjacentes aux joues du caisson peuvent être associées, solidaires, à la paroi de fond.

Avantageusement, la paroi de fond est coudée.

De préférence, le caisson est alimenté en maïs par l'intermédiaire d'au moins un volume doseur de maïs. Plusieurs volumes doseurs permettent de disposer de plusieurs sortes ou goûts de maïs.

La paroi du fond est avantsgeusement associée à un mécanisme de remplissage du ou des volumes doseurs, grâce à quoi l'ouverture de la paroi de fond, à la fin de chaque cycle d'éclatement, entraîne automatiquement le remplissage du volume doseur vide qui a servi en dernier lieu. Le ou les volumes doseurs sont associés à un mécanisme de vidange sélectif, lié au choix fait par le consommateur du type de maïs.

Selon une caractéristique préférée, la paroi de fond du caisson est susceptible de verser la charge de maïs éclaté dans un gobelet mis en place par un dis tributeur de gobelets.

De manière tout particulièrement avantageuse, le distributeur de gobelets est celui qui est décrit dans la demande française n° 90 11 970 du Demandeur dont on incorpore ici l'enseignement par référence. En effet, le système de renversement de gobelet décrit dans cette demande s'intègre de manière idéale au dispositif conforme à la présente invention, notamment grâce à la paroi de fond oblique qui laisse la place nécessaire au logement du système de renversement, cette paroi de fond pouvant même constituer une paroi de canalisation du système de renversement. On obtient grâce à cette disposition une machine particulièrement compacte.

Enfin, le dispositif de l'invention s'intègre de préférence dans une machine de distribution à pièces, éventuellement associée à un dispositif de loterie.

D'autres caractéristiques et avantages apparaîtront à la lecture de la description suivante qui sera faite d'un mode de réalisation. On se référera aux dessins annexés sur lesquels :

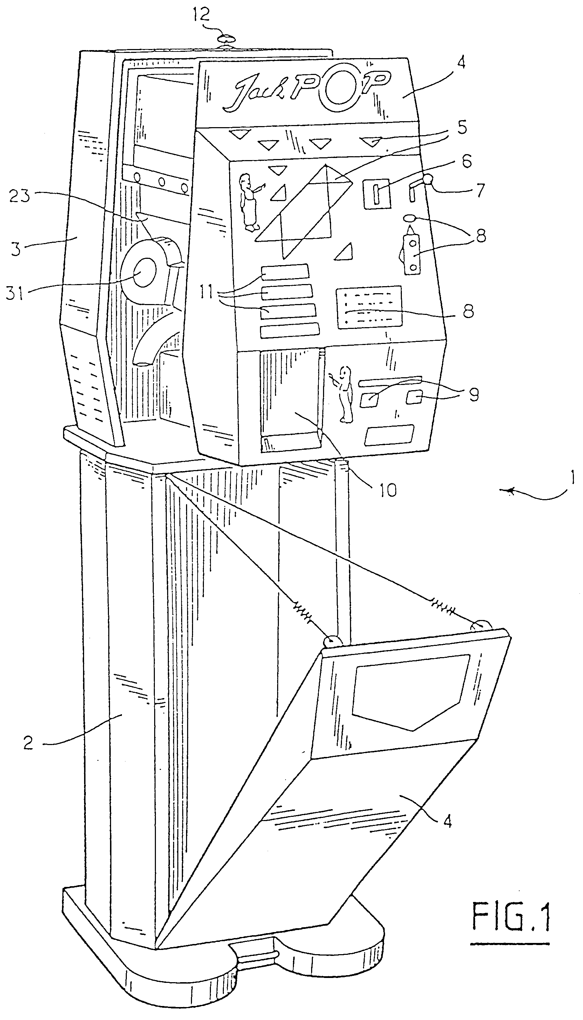

- la figure 1 est une vue en perspective de la machine, les compartiments du haut et du bas étant ouverts.

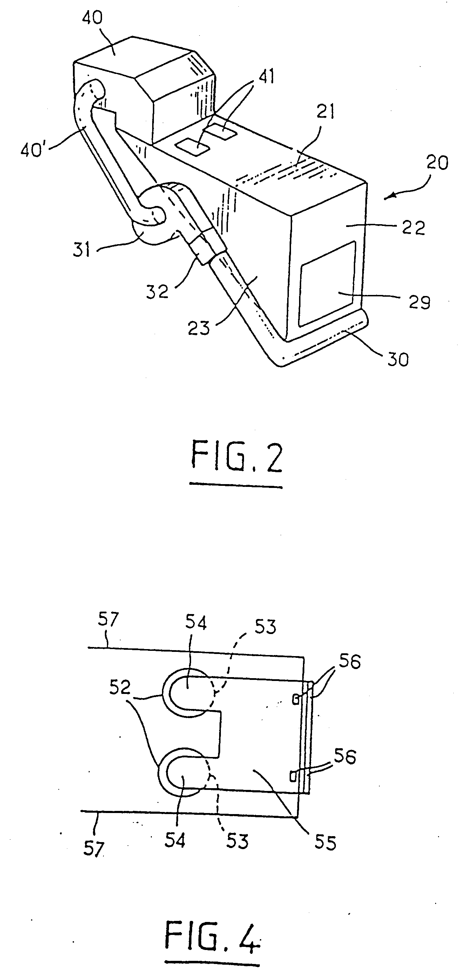

- La figure 2 est une vue en coupe schématique frontale du cuiseur et du distributeur.
- La figure 3 est une vue en perspective schématique du cuiseur.
- La figure 4 est une vue schématique en coupe horizontale du système d'obturation supérieure des tubes doseurs, du distributeur.

La machine 1 à distribuer le pop-corn revêt une forme générale attrayante, par exemple celle d'un personnage stylisé, avec ses pieds et ses mains. Le corps cache en fait deux compartiments respectivement inférieur 2 et supérieur 3. Le compartiment inférieur 2 est accessible par l'avant grâce à une porte basculante 4 et contient typiquement le magasin à gobelets et barillet tournant décrit dans la demande française n° 90 11 970. La partie électronique de l'appareil est fixée sur une platine elle-même montée à l'intérieur de la porte basculante 4 et facile d'accès.

Le compartiment supérieur 3 renferme un ensemble de dispositifs montés sur rails de manière à pouvoir s'extraire vers l'avant, solidairement de la façade avant 4. Celle-ci comporte une animation lumineuse 5, la fente 6 d'un monnayeur, le levier 7 d'une loterie, toutes sortes de voyants 8 concernant l'indication de mise hors-service, les résultats de la loterie et des informations sur le déroulement du procédé, des boutons 9 de sélection du type (goût) de pop-corn choisi, une ouverture 10 à hauteur de main pour retirer un gobelet rempli de la portion de maïs, des fenêtres 11 de vision de l'intérieur du cuiseur pour voir éclater le maïs pendant la cuisson. Sur le dessus du compartiment, une serrure 12 permet de verrouiller et déverouiller le compartiment supérieur, commandant lui-même l'ouverture du compartiment inférieur.

Le compartiment supérieur 3 ouvert laisse apparaître le ventilateur 31 du cuiseur qui va maintenant être décrit.

Le système conforme à l'invention comprend un cuiseur-souffleur 20 alimenté par un distributeur 50.

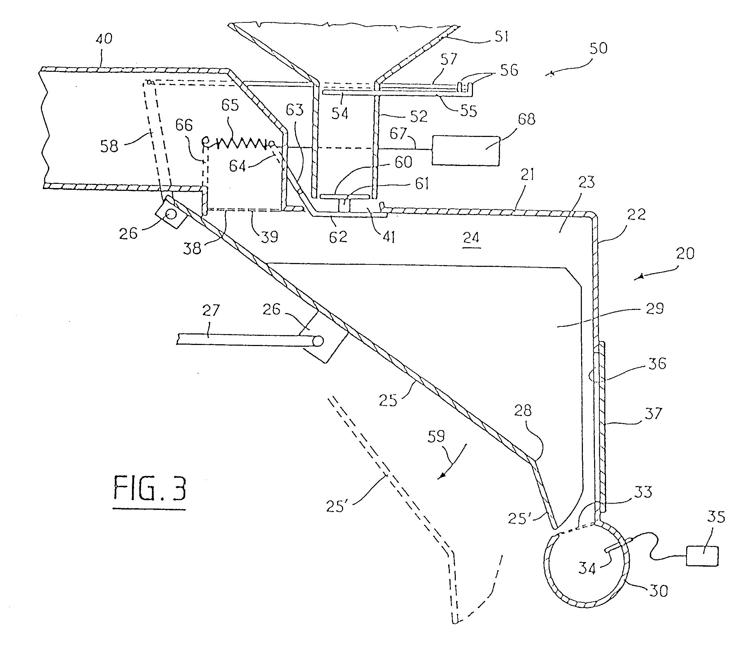

Le cuiseur 20 est réalisé sous forme d'un caisson métallique 24 sensiblement triangulaire, présentant une paroi supérieure 21 horizontale, une paroi frontale verticale 22, et deux joues latérales horizontales 23. Ces parois sont fixes tandis qu'une paroi diagonale de fond 25 fermant le caisson est montée articulée autour d'un axe horizontal 26 placé près du coin supérieur du caisson, de sorte que la paroi de fond 25 peut se déplacer entre une position de fermeture, telle que représentée en traits pleins sur la figure 3, et la position d'ouverture et de versement esquissée en pointillés sous la référence. 25'. La paroi 25 comporte l'attache 26 d'une bielle 27 reliée à des moyens moteurs classiques non représentés permettant le passage d'une position à l'autre, sur commande.

La paroi 25 est cintrée vers l'intérieur du caisson en formant un angle de pliage 28 et comporte deux joues verticales 29 formant un ensemble verseur. Les joues verticales 29 mobiles sont sensiblement tangentes aux joues fixes 23 du cuiseur. Elles permettent une bonne canalisation du maïs éclaté lors de la vidange, évitent des risques d'ouverture intempestive de la paroi du fond lors de l'éclatement, et permettent aussi d'éviter le coincement de maïs qui empêcherait une bonne refermeture de la paroi du fond.

Le coin inférieur du caisson est occupé par une conduite de soufflage 30 reliée à un souffleur 31 équipé d'une résistance chauffante 32 et logé contre l'une des joues 23 du caisson. La conduite 30 envoie l'air chaud dans le caisson au travers d'une grille 33 inclinée. Une sonde 34 reliée à un régulateur 35 lui-même relié (par des connexions non représentées) à la résistance 32 permet de commander la température de l'air pulsé envoyé dans le cuiseur.

La paroi frontale avant 22 du caisson comporte un orifice 36 recouvert par une vitre 37 permettant de voir l'intérieur du caisson.

La paroi supérieure 21 du caisson comporte, près de son coin supérieur, une ouverture 38, munie d'une grille 39, pour l'évacuation de l'air soufflé par une cheminée 40. Il est possible de prévoir un recyclage, en tout ou partie, de l'air de chauffe au moyen d'une conduite de recirculation thermiquement isolée 40' piquée sur la cheminée 40 et renvoyant l'air vers le ventilateur 31. A l'intérieur de la cheminée 40, une trappe (non représentée) réglable permet de dévier à volonté tout ou partie de l'air utilisé.

La paroi supérieure 21 comporte aussi deux ouvertures 41 communiquant avec les canaux de distribution respectifs du distributeur 50 (deux dans le cas représenté).

Le distributeur de maïs non soufflé comprend des trémies 41 en nombre égal aux types de maïs distribués (ici deux; une seule trémie est visible sur la figure 3, car elles sont placées l'une derrière l'autre).

L'extrémité basse de chaque trémie 51 communique avec des tubes-doseurs verticaux 52, disposés en dessous des ouvertures 41 du cuiseur.

Avantageusement, les tubes-doseurs 52 sont réalisés sous forme de pièces distinctes des trémies 51, pour pouvoir être plus facilement changés si la dose à distribuer doit être grandement modifiée.

Les tubes 52 comportent à leur partie supérieure une large fente 53 s'étendant pratiquement sur une demi-circonférence de manière à laisser passer une languette obturatrice horizontale 54 mobile. Les deux languettes coplanaires 54 sont formées dans une même pièce 55 en forme de plaque à laquelle est fixée, en 56, une tringlerie 57 de commande. Cette tringlerie 57 articulée en 56, est articulée à son autre extrémité sur un bras 58 solidaire de la paroi de fond 25, de telle sorte que l'ouverture de la paroi 25 dans le sens de la flèche 59 entraîne le déplacement horizontal de la plaque 55 de manière que les languettes obturatrices 54 s'escamotent et libèrent la communication des tubes-doseurs 52 avec les trémies 51. Le mouvement inverse de la paroi de fond 25 provoque la fermeture de cette communication.

La partie inférieure des tubes-doseurs 52 est fermée, de manière amovible, par un disque ou plaquette 60 portée par un pied 61 réglable (par vissage par exemple) solidaire d'un clapet basculant 62. Le clapet 62 bascule autour d'un axe horizontal 63 et est solidaire d'un bras 64 sollicité d'un côté vers une position de butée du clapet 62 par un ressort 65 accroché sur une paroi fixe 66 et de l'autre côté par une tige 67 dont le déplacement est commandé par un électroaimant. Le disque 60 qui présente un jeu large avec les parois du tube 52 permet d'éviter les coincements de grains de maïs avec le clapet 62, qui ne manqueraient pas d'arriver en l'absence du disque.

Le fonctionnement de la machine est le suivant.

Il convient d'abord de remplir la machine. On déverrouille la serrure 12 et on tire vers l'avant l'intérieur du compartiment supérieur 3, puis on ouvre la porte inférieure 4.

On peut alors remplir dans la partie supérieure les trémies 51 de maïs de type différent, et collecter l'argent de la caisse du monnayeur.

Dans le compartiment inférieur, on peut remplir le magasin de gobelets (par exemple 200 gobelets).

Après fermeture, l'ensemble est prêt pour un cycle de fonctionnement.

La machine étant sous tension, l'animation lumineuse fonctionne. A la première mise sous tension, le fond 25 s'ouvre, vide, et les tubes-doseurs 52 se remplissent.

Un radar peut détecter un consommateur qui passe à proximité; l'animation sonore se met en route.

Le consommateur introduit une pièce dans le monnayeur - la musique change et instruit le consommateur du fonctionnement d'une loterie. L'animation lumineuse est totale et fixe. Seul un voyant clignotant indique qu'il faut baisser la manette 7.

Le consommateur abaisse la manette 7 de loterie ce qui déclenche la distribution d'un gobelet dans le compartiment 10 protégé par une trappe. L'animation lumineuse redevient tournante.

A ce moment, le consommateur choisit parmi les goûts qui sont offerts, celui qui lui convient, en actionnant les boutons à sa disposition.

Dès cet instant, le cycle de fabrication du "pop-corn" démarre.

Les deux tubes-doseurs 52 sont pleins. Le ventilateur 31 et la chauffe 32 se mettent en route; quelques instants après, l'un des clapets 62 s'ouvre quelques secondes suivant la sélection du consommateur commandée par l'un des électro-aimants 68. Le maïs tombe sur la grille 33 et est brassé dans l'air chauffé à température constante.

La température de l'air, le débit d'air, la forme de la partie inférieure 25' du fond 25 et le temps de cuisson font qu'il est obtenu une expansion maximum et un goût idéal du maïs cuit. En particulier, la forme coudée du fond 25 permet d'établir au dessus de la grille 33 une colonne de maïs équilibrée par rapport à la pression de ventilation. La pente de la partie 25' (qui n'est pas verticale à dessein) favorise le roulement du maïs. Le volume formé entre la partie 25', les joues latérales et la paroi avant 22 permet de recevoir la quantité de maïs à expanser.

Le temps de cuisson écoulé, le ventilateur 31 et la chauffe 32 s'arrêtent. Quelques instants après, le fond 25 s'ouvre, commandé par un moteur non représenté. Le résidu de souffe à travers la grille 33 suffit à dégager celle-ci de toute trace de maïs. Les joues 29 canalisent correctement le pop-corn vers l'ouverture d'un gobelet en attente situé juste en-dessous. Les tubes-doseurs 52 sont à nouveau remplis, la biellette 58 actionnant la tirette 57. Dans le cas où la loterie serait gagnante, la machine le chante; une animation lumineuse anarchique apparaît; un voyant lé signale.

Le consommateur, sans payer à nouveau, appuie sur la manette 7 et le cycle recommence.

Dans le cas où la loterie est perdante; une musique et un voyant le signale; le cycle est terminé et la machine est disponible.

## Revendications

1. Dispositif de préparation de maïs éclaté, du type comprenant une chambre d'éclatement, un moyen (30) pour introduire de l'air chaud à sa partie inférieure, et des moyens (41) pour introduire du maïs à sa partie supérieure, caractérisé en ce que la chambre d'éclatement est réalisée sous forme d'un caisson (24) de forme sensiblement triangulaire possédant une paroi supérieure (21) sensiblement horizontale, une paroi frontale (22) sensiblement verticale, deux joues latérales (23) sensiblement verticales, et une paroi de fond (25) oblique et mobile susceptible d'occuper une position de fermeture du caisson (24) pour la réalisation de l'éclatement et une position d'ouverture pour le versement d'une charge de maïs éclaté.

2. Dispositif selon la revendication 1, caractérisé en ce que la paroi de fond (25) est articulée près du coin supérieur aigu du caisson.

3. Dispositif selon l'une quelconque des revendications 1 ou 2, caractérisé en ce que, à la paroi de fond (25), sont associées deux joues (29) de canalisation adjacentes aux joues (23) du caisson.

4. Dispositif selon l'une quelconque des revendications 1 à 3, caractérisé en ce que la paroi de fond (25) est coudée.

5. Dispositif selon l'une quelconque des revendications 1 à 4, caractérisé en ce que le caisson (24) est alimenté en maïs par l'intermédiaire d'au moins un volume doseur (52) de maïs.

6. Dispositif selon la revendication 5, caractérisé en ce que la paroi de fond (25) est associée à un mécanisme (54) de remplissage du ou des volumes doseurs.

7. Dispositif selon l'une quelconque des revendications 5 ou 6, caractérisé en ce que le ou les volumes doseurs (52) sont associés à un mécanisme de vidange sélectif (60,62).

8. Dispositif selon l'une quelconque des revendications 1 à 7, caractérisé en ce que la paroi de fond (25) du caisson est susceptible de verser la charge de maïs éclaté dans un gobelet mis en place par un distributeur de gobelets.

9. Dispositif selon la revendication 8, caractérisé en ce qu'il est associé à une machine (1) de distribution à pièce.
